(19) Europäisches Patentamt
European Patent Office
Office européen des brevets

(11) **EP 3 968 234 A1**

(12) **EUROPEAN PATENT APPLICATION**

(43) Date of publication:
**16.03.2022 Bulletin 2022/11**

(21) Application number: **20195894.9**

(22) Date of filing: **14.09.2020**

(51) International Patent Classification (IPC):
**G06N 3/04** *(2006.01)*    **G06N 3/08** *(2006.01)*

(52) Cooperative Patent Classification (CPC):
**G06N 3/0454; G06N 3/08;** G06N 3/0481

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universität Mannheim**
**68131 Mannheim (DE)**

(72) Inventors:
• **BARTELT, Christian**
**67434 Neustadt Weinstr. (DE)**
• **MARTON, Sascha**
**69181 Leimen (DE)**

(74) Representative: **Müller-Boré & Partner**
**Patentanwälte PartG mbB**
**Friedenheimer Brücke 21**
**80639 München (DE)**

(54) **METHOD, COMPUTER PROGRAM PRODUCT AND SYSTEM FOR OPTIMISING THE USE OF AN ARTIFICIAL NEURAL NETWORK**

(57) Summarising the invention, a computer-implemented method is provided. The method comprises performing a transformation step comprising retrieving a set of parameters of a first artificial neural network, wherein: the set of parameters includes at least a plurality of weights; and the first artificial neural network provides a first approximation of a target function; providing the set of parameters as input to a second artificial neural network associated with a representation basis in an algebra; providing, by the second artificial neural network, a set of coefficients as output; generating a combination of the representation basis with the set of coefficients; wherein the set of coefficients is such that the combination of the representation basis with the set of coefficients provides an algebraic expression of a second approximation of the target function.

Figure 2

## Description

### Technical Field

The following description relates to a method, a computer program product and a system for optimising the use of an artificial neural network.

### Background

Artificial neural networks (ANNs) are information-processing systems loosely inspired by the human brain that can learn from training data and generalize based thereon. An ANN is configured to process input data and provide a result based on these input data. The way in which the result is obtained, which depends on the structure of the ANN (e.g. how many neurons, the values of the weights and biases...), is not interpretable by a user. Accordingly, an ANN is usually operated as a "black box" whose functioning is not understood by human users.

Exemplarily, ANNs can be used for learning a target mathematical function. The trained function learned by the ANN, however, is an approximation of the real target function. The performance of the ANN, i.e. the accuracy of the approximated function in this case, depends on its structure (e.g. parameters and hyperparameters) and, thus, also on its training, wherein training an ANN can be very expensive computationally.

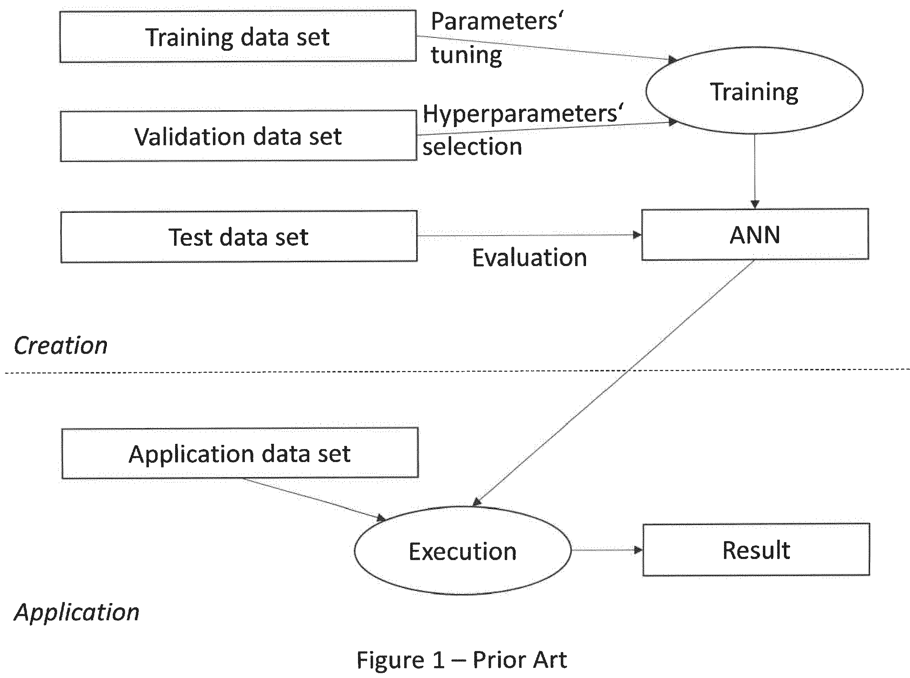

**Figure 1** shows a schematic representation of a process for using an artificial neural network according to the prior art.

The process comprises a creation phase in which the ANN is set up. Each data set may undergo data preparation and feature engineering before being employed. The ANN is trained using a training data set for tuning the parameters (weights and biases) and a validation data set for selecting the hyperparameters (e.g. activation function, loss function...). The result of the training is an ANN which, for example, provides an approximation of a target function. A test data set may be used to provide an evaluation of this approximation, before proceeding to applying the ANN. The training, validation and test data sets comprise both input values and corresponding output values.

The subsequent phase is indeed the application phase, in which the ANN is executed on an actual data set, the application data set, that comprises only input values for which an output is sought. Accordingly, a result such as a prediction or a determination is obtained by feeding these input values to the ANN.

### Summary

It is an object of the invention to optimise the performance of an ANN, i.e. increase the accuracy of a result provided by the ANN while reducing the training time. In other words, it is an object of the invention to improve both the efficiency and the accuracy when employing an ANN.

The achievement of this object in accordance with the invention is set out in the independent claims. Further developments of the invention are the subject matter of the dependent claims.

According to one aspect, a computer-implemented method is provided. The computer-implemented method comprises a transformation step comprising:

retrieving a set of parameters of a first artificial neural network, wherein:

the set of parameters includes at least a plurality of weights; and
the first artificial neural network provides a first approximation of a target function; providing the set of parameters as input to a second artificial neural network associated with a representation basis in an algebra;

providing, by the second artificial neural network, a set of coefficients as output;
generating a combination of the representation basis with the set of coefficients;
wherein the set of coefficients is such that the combination of the representation basis with the set of coefficients provides an algebraic expression of a second approximation of the target function.

Generally, an ANN comprises a plurality of artificial neurons, wherein each neuron is a propagation function that receives one or more inputs and combines them to produce an output, wherein the inputs have different weights. For example, the propagation function may be a sigmoid, so that, for inputs $x_1$, $x_2$, ..., $x_n$ having respective weights $w_1$, $w_2$, ..., $w_n$, the output of a neuron is

$$\frac{1}{1 + \exp(-\sum_{i=1}^{n} w_i x_i)} .$$

Other examples of propagation function include hyperbolic tangent and rectifier. Optionally, the propagation function may include a bias term.

An ANN is typically organized in layers and comprises at least an input layer that receives one or more (initial) input values and an output layer comprising one or more output neurons, which generate one or more (final) output values, respectively. The input layer comprises one or more input nodes that are not neurons, since no computations are performed by these nodes, which merely pass the input values to the subsequent layers. Optional layers between the input layer and output layer are called hidden layers, and the neurons in the hidden layers receive inputs from the inputs or other neurons and provide the output to one or more other neurons. Exemplarily, the first ANN may comprise at least one hidden layer.

The weights and the optional biases are the parameters of an ANN. An ANN has initially predetermined weights and biases (e.g. educated guesses or randomly initialized weights and biases) and the effect of training the ANN is an adjustment of the weights and of the optional biases of the propagation functions of the single neurons. Accordingly, the set of parameters of the first ANN includes at least a plurality of weights, wherein the number of weights depends on the structure of the first ANN, in particular the number of neurons. Optionally, the set of parameters may further comprise one or more biases.

The tuning of the parameters is performed using a training dataset comprising input value(s) and respective goal output value(s): the input value(s) are fed to an ANN and the final output value(s) produced by the ANN are compared with the goal output value(s). The parameters of the ANN are adjusted to minimize the deviation of the final output value(s) from the goal output value(s). The training dataset is used more than once, so that the training comprises a plurality of epochs, wherein an epoch refers to a training phase that goes through the whole training dataset once.

The other features relating to an ANN, such as the number of hidden layers and the type of propagation function, are called hyperparameters. The hyperparameters are not adjusted by the ANN itself, but can be selected based on a second phase of the training that uses a validation dataset.

The first artificial neural network provides a first approximation of a target function. This means that, if the target function is $f(\vec{x})$ with $\vec{x} = (x_1, ..., x_n)$ being the ordered set of input values, the output $O(\vec{x})$ provided by the first ANN is such that $|O(\vec{x}) - f(\vec{x})| < \varepsilon$ for each $\vec{x}$, wherein $\varepsilon > 0$ is a measure of the accuracy of the first approximation. In other words, the first ANN computes the target function within a given accuracy. In the above notation, it has been assumed that the target function is a scalar function, so that the first ANN has one output neuron. In a more general case the target function may be a vector function $\vec{f}(\vec{x})$, which corresponds to a first ANN having an output layer comprising a plurality of neurons.

The method comprises a transformation step comprising retrieving the set of parameters of the first artificial neural network. Retrieving the set of parameters may comprise accessing a memory or data storage of a computing device in which the first ANN is stored.

The transformation step further comprises providing the set of parameters as input to a second artificial neural network associated with a representation basis in an algebra. In other words, the plurality of weights and, optionally, the one or more biases are fed to the second ANN. The second ANN may also be stored in a data storage and retrieved when needed.

In particular, the set of parameters of the first ANN may be organized as an ordered list of values (or vector) and each parameter in the set is given to a corresponding input node of the second ANN. Accordingly, the second ANN has a number of input nodes equal to the number of parameters of the first ANN. In some cases, there may be different second ANNs trained depending on the number of parameters of the first ANN and the appropriate one may be selected. Thus, the method may comprise selecting the second ANNs among a plurality of second ANNs based on the specific first ANN. In other cases, encodings may be used to convert an arbitrary number of input values (i.e. the parameters of the first ANN) into a fixed number of input values. Such an encoding could for instance be implemented using autoencoders to bring the set of parameters of the first ANN to a uniform size.

The transformation step further comprises providing, by the second artificial neural network, a set of coefficients as output. Unlike the first ANN, the second ANN does not provide *per se* an approximation of the target function. Instead, the one or more output values of the second ANN, which are referred to as "set of coefficients", are values that, together with the representation basis, provide an algebraic expression of a second approximation of the target function.

Indeed, the second ANN is associated with a representation basis in an algebra, as explained below. Examples of the algebra include, but are not limited to, linear algebra and Boolean algebra. For instance, if the target function is a polynomial function, an appropriate algebra may be the linear algebra and, if the target function is a Boolean function, an appropriate algebra may be the Boolean algebra. More generally, if the target function is an analytical function or a hypergeometric function, which, thus, can be expressed as a series expansion, the linear algebra may also be suitable.

The representation basis is a set of elements that can be used to express any function in that algebra that takes a certain number of input variables. The representation basis may comprise one or more elements. Further, the representation basis may comprise a composition criterion, i.e. a rule on how to combine the elements in the representation basis with each other to express a function, such as a type of operation in that algebra. The representation basis may be stored in a data storage and retrieved when needed.

For example, any Boolean function can be represented in canonical disjunctive normal form (CDNF), so that the representation basis may be the set of all possible conjunctions of the input variables, considered either in their positive form or their negated form. For example, in the case of two input variables $x_1$, $x_2$, the representation basis would be the set comprising $(x_1 \wedge x_2)$, $(x_1 \wedge \overline{x}_2)$, $(\overline{x}_1 \wedge x_2)$ and $(\overline{x}_1 \wedge \overline{x}_2)$ and the composition criterion would be the disjunction. Any Boolean function of $x_1$, $x_2$ can be expressed as $a(x_1 \wedge x_2) \vee b(x_1 \wedge \overline{x}_2) \vee c(\overline{x}_1 \wedge x_2) \vee d(\overline{x}_1 \wedge x_2)$, wherein the coefficients $a,b,c,d$ can be 0 or 1.

For linear algebra, a representation basis may be a subset of the monomial basis, e.g., in the case of a single input variable $x$, is 1, $x$, $x^2$, $x^3$ ... $x^n$, with $n \in N$, which allows to express any polynomial of degree $\leq n$ through a linear combination of the elements in the representation basis. Accordingly, the composition criterion would be addition. Similarly, a monomial basis for a plurality of input variables may be defined.

The set of coefficients, once generated by the second ANN, may be stored in a data storage. The set of coefficients may comprise one or more coefficients. In particular, the number of coefficients corresponds to the number of output neurons of the second ANN. The number of output neurons of the second ANN matches the number of elements in the representation basis, so that there is one coefficient for each element.

In other words, the second ANN may be configured to provide a number of coefficients corresponding to a given representation basis. If the set of coefficients comprises a plurality of coefficients and the representation basis comprises a plurality of elements, the number of coefficients equals the number of elements.

Accordingly, there may be a different second ANN for each representation basis, in a one-to-one correspondence. This means the each second ANN may have been previously trained based on a specific algebra and a specific representation basis.

Since the appropriate algebra is determined by the type of target function (e.g. Boolean) the second ANN may be chosen according to the target function or, more specifically, according to its algebra. The algebra may be any algebra that allows a sufficiently accurate representation of the target function.

Thus, exemplarily, the method may further comprise selecting the second ANN out of a plurality of second ANNs based on the target function. Since the second ANN is associated with the representation basis, selecting the second ANN implies selecting a representation basis.

For instance, an algebra estimation of the target function may be carried out. Since the target function would usually not be known, the algebra estimation may be made based on the learning problem that the first ANN aims to solve. Further, the specific representation basis may be determined by other features of the target function (such as the number of input variables). Accordingly, an assessment of these other features may be carried out in order to determine the appropriate representation basis (e.g. the value of the parameter n for a monomial basis) .

If the algebra estimation and the representation basis determination can be carried out, a second ANNs associated with (i.e. trained based on) the estimated algebra and determined representation basis is selected.

In other instances, the selection may be made by trial and error. In other words, different second ANNs may be tried out and the result of the algebraic expressions obtained from them (as explained below) may be compared to the result of the first ANN. The second ANNs that leads to the result that is more similar to the one of the first ANN may then be selected. It is indeed to be expected that second ANNs related to algebras that are not appropriate for the target function of a given first ANN would lead to very different results.

The selection based on the target function may be done concurrently to the selection based on the given first ANN discussed above.

The method further comprises generating a combination of the representation basis with the set of coefficients. The set of coefficients is such that the combination of the representation basis with the set of coefficients provides an algebraic expression of a second approximation of the target function.

The output of the second ANN is, as explained, an ordered set of coefficients that corresponds to the ordered set of elements in the representation basis. In this way, each coefficient can be assigned to its respective element in the representation basis. Accordingly, generating the combination of the representation basis with the set of coefficients comprises assigning the set of coefficients to the representation basis. This means that each coefficient is linked to an element in the representation basis, e.g. by means of multiplication. In other words, one coefficient of the plurality of coefficients is assigned to one element of the plurality of elements in a one-to-one correspondence.

For example, if the output of the second ANN is the ordered set of coefficients $\vec{C} = (c_1, c_2,..., c_n)$ and the representation basis comprises the ordered set of elements $\vec{B} = (b_1, b_2,..., b_n)$, the set of coefficients is assigned to the representation basis yielding $c_1 b_1$, $c_2 b_2$, ..., $c_n b_n$. In the case of a representation basis with a single element and a corresponding single coefficient, the result of assigning would be $c_1 b_1$. The coefficients may be thought of as weights for the elements of the representation basis, so that assigning one coefficient of the plurality of coefficients to one respective element of the plurality of elements forms coefficient-weighted elements.

Further, in the case of a plurality of coefficients and a plurality of elements in the representation basis, generating the combination of the representation basis with the set of coefficients comprises combining the coefficient-weighted elements of the representation basis with each other according to the composition criterion. In other words, all elements of the representation basis, each with its own coefficient (which may be zero), are used, combined with each other, to obtain the algebraic expression. After having been generated, the algebraic expression may be stored in a data storage.

The algebraic expression is a representation of the second approximation in the specific algebra, which explicitly shows the relation between the input variables (which are the same that would be fed to the first ANN) and the output. As such, the algebraic expression is intelligible for human users. If the target function is $f(\vec{x})$, the

algebraic expression of the second approximation, $E(\vec{x})$, obtained from the set of coefficients provided by the second ANN and the representation basis is such that $|E(\vec{x}) - f(\vec{x})| < \delta$ for each $\vec{x}$, wherein $\delta > 0$ is a measure of the accuracy of the second approximation.

It should be noted that, since $\delta$ and $\varepsilon$ are the errors on the results, the accuracy of the result provided by the second or first approximation increases with decreasing $\delta$ or $\varepsilon$, respectively. For example, for a data set comprising $m$ sets of input values $\vec{x}^1,... ,\vec{x}^m$ we can determine the accuracy of the second approximation, $A(E)$, for instance using the coefficient of determination, $R^2$-Score (i.e. $A(E) = R^2$) which is defined as:

$$R^2 = 1 - \frac{\sum_{i=1}^{m}(f(x_i) - E(x_i))^2}{\sum_{i=1}^{m}(f(x_i) - \overline{f})^2},$$

where

$$\overline{f} = \frac{1}{m}\sum_{i=1}^{m}f(x_i).$$

The accuracy of the first approximation, $A(O)$, can be similarly defined.

The role of the second ANN is to provide a transformation from a first approximation of the target function to a second approximation of the target function. While the first approximation is expressed in a subsymbolic manner by the first ANN, the second approximation is expressed in a symbolic manner by the algebraic expression. This transition from the first ANN to the algebraic expression results in a greater accuracy, meaning that the second approximation is more accurate than the first approximation, i.e. $\delta < \varepsilon$, specifically when the algebra is appropriate for the given target function and/or the second ANN is sufficiently complex and well trained.

In other words, the concatenation of the first ANN and the second ANN as described above improves the accuracy of the result that would normally be provided by the first ANN alone. Using the algebraic expression derived from the first ANN by means of the second ANN instead of the first ANN itself on a given input data set, the accuracy of the result associated with that input data set is increased.

The accuracy is a critical parameter, since ANNs have a wide variety of applications, including detection of defects in mechanical systems, prediction of failure of a mechanical component, traffic prediction in order to increase security on the roads, medical purposes (e.g. identification of risk factors for a given illness or of the factors that affect the efficacy of a drug).

The fact that the algebraic expression is human-understandable, unlike the first ANN, has the further advantage of allowing a manual fine-tuning on the side of the user.

Accordingly, exemplarily, the method may further comprise evaluating the algebraic expression on an input data set. Indeed, the resulting algebraic expression can be used on input data set that would conventionally be fed to the first ANN. The input data set may comprise one or more sets of input values and, for each set of input values $\vec{x}$, the second approximation of the target function, E, is computed, i.e. the output $E(\vec{x})$ is calculated.

The input data set may be an application data set, i.e. a data set whose corresponding output(s) via the target function are not known. In other words, the application data set may be an actual data set for which the second approximation can be used to obtain a needed result, such as a prediction or determination. For example, the application data set may comprise one or more sets of input values.

In other examples, before applying the algebraic expression to application data sets, the second approximation may be tested using a test data set, comprising a plurality of sets of input values and respective goal output values. In this way, the accuracy of the second approximation may be evaluated. Exemplarily, if the accuracy is not sufficient, e.g. if a desired accuracy is set for a specific application, a user may fine-tune the algebraic expression, e.g. by modifying one or more coefficients and/or one or more elements of the representation basis. Accordingly, the method may further comprise modifying, in response to a user input, the algebraic expression.

In some examples, the first ANN may have already completed training when the transformation step is performed. In these cases, the derivation of the second approximation as algebraic expression generally improves the accuracy independently of the quality of the training of the first ANN. Even if the first ANN suffers from underfitting or overfitting, the second approximation provides a reasonable accuracy.

In other examples, the second ANN may be already employed while training the first ANN in order to improve the efficiency of the training. In particular, as will be discussed below, the training time may be effectively reduced.

Exemplarily, the method may further comprise:

before performing the transformation step, performing a training step comprising training the first artificial neural network for a number of epochs using a learning data set;
after performing the transformation step, performing an assessment step comprising evaluating the algebraic expression of the second approximation using at least part of the learning data set to determine an accuracy of the second approximation; and
if the accuracy of the second approximation is less than a threshold accuracy, repeating the training step, the transformation step and the assessment step until the accuracy is equal to or greater than the threshold accuracy.

The first ANN may be trained according to conventional methods. In particular, the learning data set, which may be stored in a data storage, may comprise at least a training data set and a validation data set, i.e. may be split into these two data sets. However, in place of the conventional strategies about the optimisation of the training time, such as the early stopping, the training is stopped after a given number of epochs and the first ANN is "transformed" into the algebraic expression.

The number of epochs may be a predetermined value, e.g. associated with the specific first ANN, or a value input by a user. In both cases, it may be stored in a data storage. For example, the number of epochs may be equal to or less than 15, further exemplarily equal to or less than 10, yet further exemplarily equal to or less than 5.

After the transformation step explained above is performed on the first ANN that has been trained only for the given number of epochs, an assessment step is performed. Specifically, the resulting algebraic expression of the second approximation is evaluated using at least part of the learning data set (e.g. only the validation data set) to determine an accuracy of the second approximation. This means that the algebraic expression is computed for a plurality of sets of input values given in the learning data set in order to obtain the respective output values. Then, using the formula discussed above, the accuracy of the second approximation can be computed.

The determined accuracy is compared with a threshold accuracy. The threshold accuracy may be a target accuracy, which may be predetermined or may e.g. be set by a user. In both cases, it may be stored in a data storage. In particular, the threshold accuracy may depend on the applications for which the first ANN was intended and for which the algebraic expression will be used. For example, the threshold accuracy may be 0.8 or 0.9.

If the accuracy of the second approximation is less than the threshold accuracy, the training of the first ANN is resumed. Accordingly, the training step is repeated, i.e. the first ANN is further trained for an additional given number of epochs. Then the transformation step and the assessment step are repeated as well, until the accuracy is equal to or greater than the threshold accuracy.

When the accuracy of the output is equal to or greater than the threshold accuracy, no further action is necessary and the algebraic expression can be used for the purposes it is intended.

In other words, the combination of the first ANN and the second ANN enables an adaptive determination of the training time of the first ANN based on a desired accuracy. Since the algebraic expression obtained thanks to the second ANN is generally more accurate than the first ANN, a reduction of the training time of the first ANN is achieved.

In the exemplary case in which the second ANN is selected among a plurality of second ANNs, as discussed above, this step may be performed only once before the transformation step.

To summarise, the method may exemplarily comprise:

> performing a training step comprising training a first artificial neural network for a number of epochs using a learning data set, wherein the first artificial neural network has a set of parameters includes at least a plurality of weights and the first artificial neural network provides a first approximation of a target function;
> performing a transformation step comprising:
>
>> retrieving the set of parameters of the first artificial neural network
>> providing the set of parameters as input to a second artificial neural network associated with a representation basis in an algebra;
>> providing, by the second artificial neural network, a set of coefficients as output;
>> wherein the set of coefficients is such that a combination of the representation basis with the set of coefficients provides an algebraic expression of a second approximation of the target function;
>
> performing an assessment step comprising evaluating the algebraic expression of the second approximation using at least part of the learning data set to determine an accuracy of the second approximation; and
> if the accuracy of the second approximation is less than a threshold accuracy, repeating the training step, the transformation step and the assessment step until the accuracy is equal to or greater than the threshold accuracy.

Another aspect of the present invention relates to a computer program product comprising computer-readable instructions, which, when executed by a computer, cause the computer to carry out the method illustrated above.

Yet another aspect of the present invention relates to a system. The system comprises at least one processor configured to carry out the method illustrated above. Exemplarily, the computer system may comprise a multi-core processor. Further, one or more GPUs may be used to speed up training of the ANNs.

Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.

Figure 1 shows a schematic representation of a process for using an artificial neural network according to the prior art.

Figure 2 shows a schematic representation of an exemplary process for using an artificial neural network according to the invention.

Figure 3 shows an example of a first artificial neural network.

Figure 4 shows an example of a second artificial neural network.

Figure 5 shows an exemplary training procedure of a second artificial neural network.

Figure 6 shows a flow chart of an exemplary method for optimising the use of an artificial neural network.

Figure 7 shows a plot comparing the accuracy of a first approximation with the accuracy of a second approximation.

Detailed Description

In the following, a detailed description of examples will be given with reference to the drawings. It should be understood that various modifications to the examples may be made. Unless explicitly indicated otherwise, elements of one example may be combined and used in other examples to form new examples.

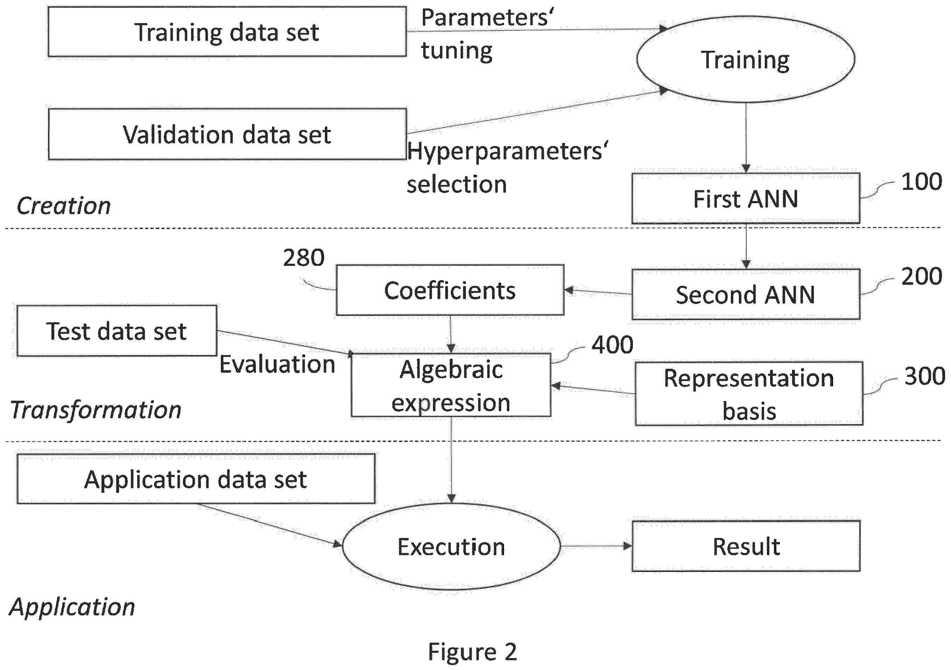

**Figure 2** shows a schematic representation of an exemplary process for using an artificial neural network according to the invention. With respect to the process of Figure 1, a new phase, the transformation phase, is introduced and there are two ANNs instead of one.

The creation phase is substantially identical, except that the first ANN 100 obtained by training on the training and validation data sets needs not be evaluated using the test data set. The reason is that it is not the first ANN 100 that is used in the application phase, as explained hereinbelow. Indeed, the first ANN 100 is transformed into an algebraic expression which is then applied to the application data set.

Specifically, in the transformation phase the parameters of the first ANN 100 are fed to a second ANN 200 that is configured (i.e. it has been trained in order) to output a set of coefficients 280 that, combined with a representation basis 300, give an algebraic expression 400 providing a second approximation of the target function. In other words, the second approximation, which is expressed by the algebraic expression 400, is derived from the first approximation, embodied by the first ANN 100. This "conversion" provides a more accurate representation of the target function.

The algebraic expression 400 may be evaluated using a test data set. Then, in the application phase, the algebraic expression 400 is computed using the application data set in order to provide a desired result.

Summarising, instead of directly using the trained first ANN 100 to e.g. make predictions, the first ANN 100 is transformed into an algebraic expression 400. By means of this conversion, the accuracy of the result can be improved even for shorter training times, thereby increasing the efficiency. Indeed, even at early stages of the training or when an inappropriate network structure/hyperparameters are selected, the algebraic expression 400 generated from the trained first ANN 100 achieves a reasonable performance. Furthermore, it is not required to find the optimal performance peak to stop the training of the first ANN 100 in order to avoid overfitting or underfitting, since the algebraic expression 400 has high accuracy even when obtained from a first ANN 100 that is already overfitting on the training data set. Therefore both accuracy and efficiency are improved.

Additionally, it is possible to manually adjust the algebraic expression 400, since it can be understood by humans. This may allow a further increase in accuracy, e.g. for a specific goal.

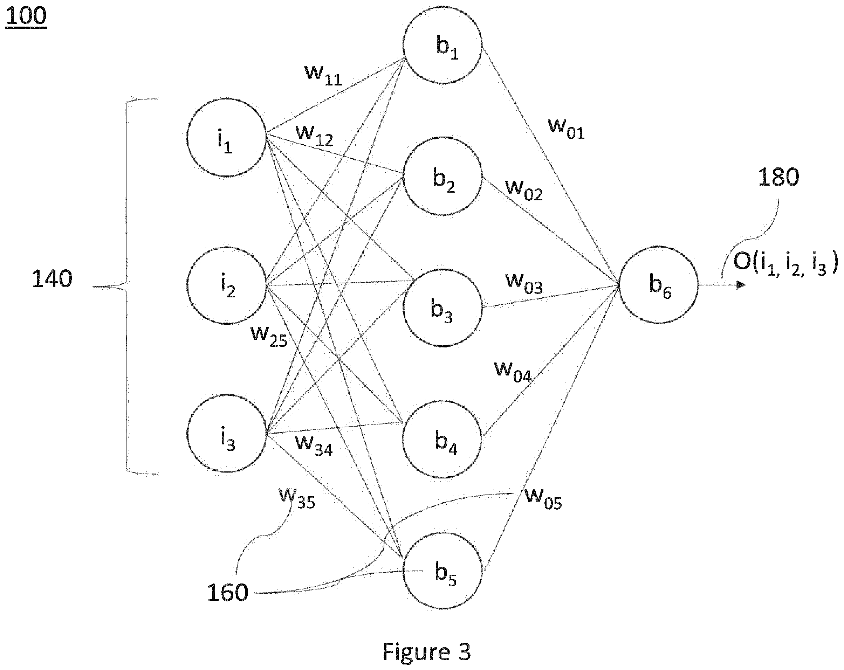

**Figure 3** shows an example of a first artificial neural network 100 to be used in the process of Figure 2. The first ANN 100 provides a first approximation of a target function. The specifics of the first ANN (e.g. number of neurons, number of hidden layers...) as shown in Figure 3 are merely an illustrative simplification and not limiting.

The first ANN 100 comprises a plurality of inputs nodes 140 for receiving input values $i_1$, $i_2$, $i_3$ and one output neuron that provides the output value 180 $O(i_1, i_2, i_3)$. The set of parameters 160 of the first ANN 100 includes all the weights and biases of the first ANN, some of which are explicitly labelled in Figure 3, e.g. the biases $b_1$ to $b_6$ and weights $w_{25}$ or $w_{03}$. The link to the reference numeral 160 is drawn only for some of the parameters for the sake of clarity. The first ANN 100 has a total of 26 parameters $p_l$ with $l \in [1,26]$, considering the weights $w_{ij}$ with $i \in [0,3]$ and $j \in [1,5]$ and the biases $b_k$ with $k \in [1,6]$.

Exemplarily, the first ANN 100 provides a first approximation of the Boolean target function $f(i_1, i_2, i_3) = i_1 \lor i_2 \lor i_3$. The first ANN 100 can be trained using the truth table for this function, obtaining the values for the set of parameters 160.

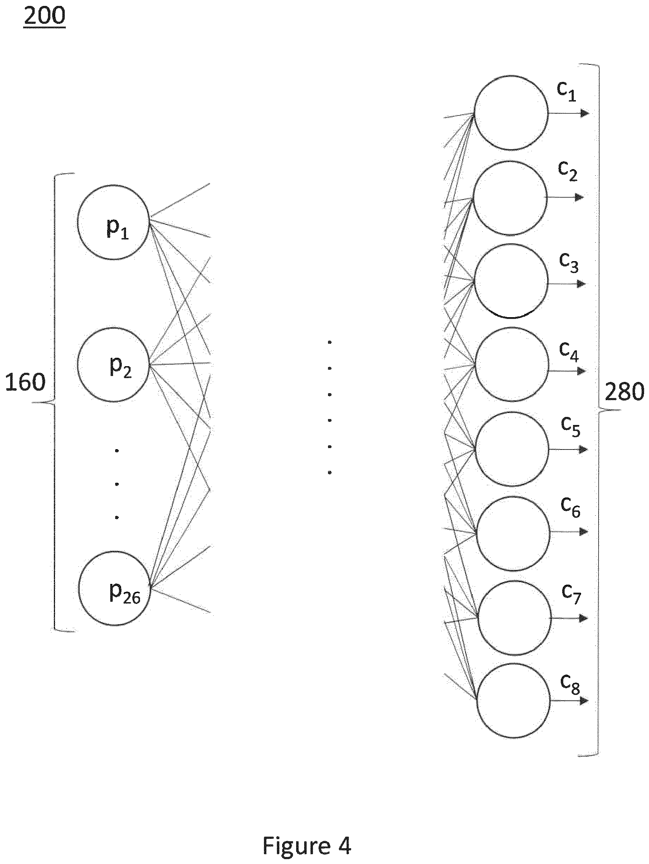

**Figure 4** shows an example of a second artificial neural network 200 to be used in the process of Figure 2. The second ANN 200 provides a set of coefficients 280 that are used to form an algebraic expression 400 providing a second approximation of the target function.

The details of the hidden layers second ANN 200 are not shown. The second ANN 200 takes as input values the values of the set of parameters 160 of the first ANN 100. In this example, accordingly, the second ANN 200 has 26 input nodes for the set of parameters $p_l$. Further, the second ANN 200 has eight output neurons, each providing an output value that is a coefficient $c_n$ with $n \in [1,8]$.

Indeed, any Boolean function with up to three variables can be expressed in CDNF using the elements of the representation basis 300 ($b_1$, $b_2$, $b_3$, $b_4$, $b_5$, $b_6$, $b_7$, $b_8$) defined as follows:

$$b_1 = (\overline{i_1} \wedge \overline{i_2} \wedge \overline{i_3})$$
$$b_2 = (\overline{i_1} \wedge \overline{i_2} \wedge i_3)$$
$$b_3 = (\overline{i_1} \wedge i_2 \wedge \overline{i_3})$$
$$b_4 = (\overline{i_1} \wedge i_2 \wedge i_3)$$
$$b_5 = (i_1 \wedge \overline{i_2} \wedge \overline{i_3})$$
$$b_6 = (i_1 \wedge \overline{i_2} \wedge i_3)$$
$$b_7 = (i_1 \wedge i_2 \wedge \overline{i_3})$$
$$b_8 = (i_1 \wedge i_2 \wedge i_3).$$

The second ANN 200 can be trained for a Boolean algebra and for a number of input variables up to three as follows. A plurality of instances of Boolean functions (with up to three variables) is generated using the rules of the Boolean algebra and for each generated Boolean functions, an input vector and an output vector are created.

The output vector is a set of coefficients 280 that, combined with the representation basis 300, gives the canonical disjunctive form of the generated Boolean function. In particular, each coefficient is multiplied for a respective element of the representation basis 300 and the elements with coefficients are linked via the disjunction operation. For example, if a generated Boolean function is $B = i_1 \wedge i_2$, its corresponding CDNF using the representation basis 300 above is $B = (i_1 \wedge i_2 \wedge \overline{i_3}) \vee (i_1 \wedge i_2 \wedge i_3)$. This can be expressed as $B = c_1 b_1 \vee c_2 b_2 \vee c_3 b_3 \vee c_4 b_4 \vee c_5 b_5 \vee c_6 b_6 \vee c_7 b_7 \vee c_8 b_8$ with ($c_1$, $c_2$, $c_3$, $c_4$, $c_5$, $c_6$, $c_7$, $c_8$) = (0,0,0,0,0,0,1,1). Accordingly, the output vector for the function B is (0,0,0,0,0,0,1,1).

The input vector is a set of parameters of a first ANN that has been trained with the following input and output values:

| $i_1$ | $i_2$ | $i_3$ | $O(i_1, i_2, i_3)$ |
|---|---|---|---|
| 0 | 0 | 0 | 0 |
| 0 | 1 | 0 | 0 |
| 1 | 0 | 0 | 0 |
| 1 | 1 | 0 | 1 |
| 0 | 0 | 1 | 0 |
| 0 | 1 | 1 | 0 |
| 1 | 0 | 1 | 0 |
| 1 | 1 | 1 | 1 |

Such input and output vectors can be similarly created for each of the plurality of examples of Boolean functions, thereby obtaining training, validation and test data sets for the second ANN. Different first ANNs may be used to create input vectors corresponding to a given output vector.

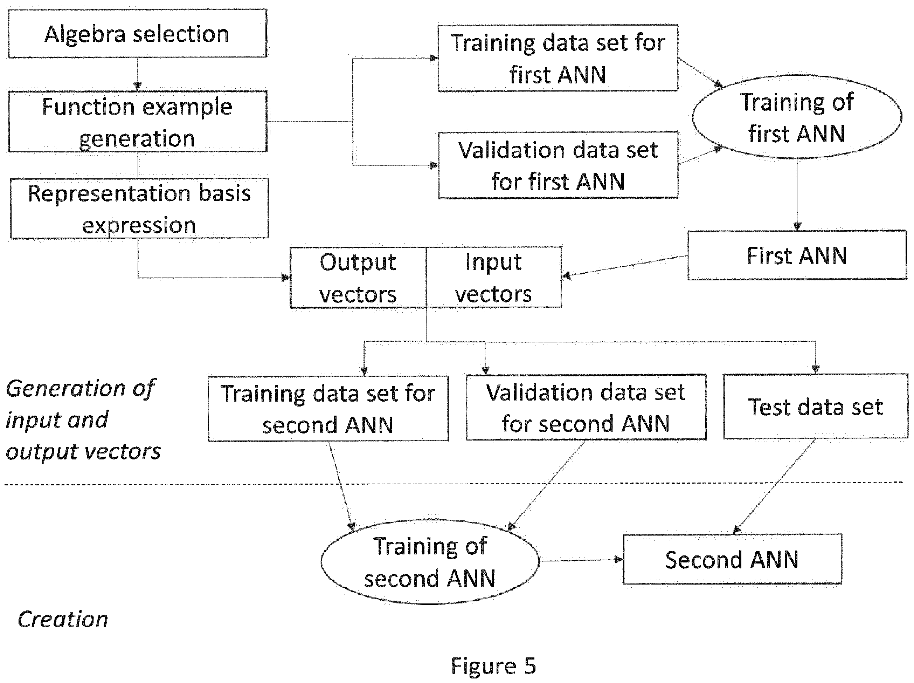

Figure 5 provides a schematic overview of this exemplary training procedure for the second ANN 200. A given algebra (e.g. Boolean) is selected and, within this algebra, a plurality of function examples is generated. For each function example (such as B), a plurality of different input values can be input to the function example in order to obtain respective output values. These input and output values from the plurality of function examples are used to form training and validation data sets for one or more first ANNs. The parameters of the first ANN(s) are then used as input vectors.

Each function example is expressed in a representation basis within the selected algebra in order to obtain the set of coefficients for that function example in the representation basis. The sets of coefficients are used as output vectors. The output vectors and the input vectors are combined to generate training, validation and test data sets for the second ANN. Accordingly, using these data sets, the second ANN is created.

If the first ANN 100 provides a first approximation of the Boolean target function $f(i_1, i_2, i_3) = i_1 \vee i_2 \vee i_3$, feeding its set of parameters 160 to the second ANN 200 would result in the set of coefficients ($c_1$, $c_2$, $c_3$, $c_4$, $c_5$, $c_6$, $c_7$, $c_8$) = (0,1,1,1,1,1,1,1). This set of coefficients 280 can be combined with the representation basis 300 to obtain the algebraic expression 400 $E(i_1, i_2, i_3) = c_1 b_1 \vee c_2 b_2 \vee c_3 b_3 \vee c_4 b_4 \vee c_5 b_5 \vee c_6 b_6 \vee c_7 b_7 \vee c_8 b_8 = (\overline{i_1} \wedge \overline{i_2} \wedge i_3) \vee (\overline{i_1} \wedge i_2 \wedge \overline{i_3}) \vee (\overline{i_1} \wedge i_2 \wedge i_3) \vee (i_1 \wedge \overline{i_2} \wedge \overline{i_3}) \vee (i_1 \wedge \overline{i_2} \wedge i_3) \vee (i_1 \wedge i_2 \wedge \overline{i_3}) \vee (i_1 \wedge i_2 \wedge i_3)$.

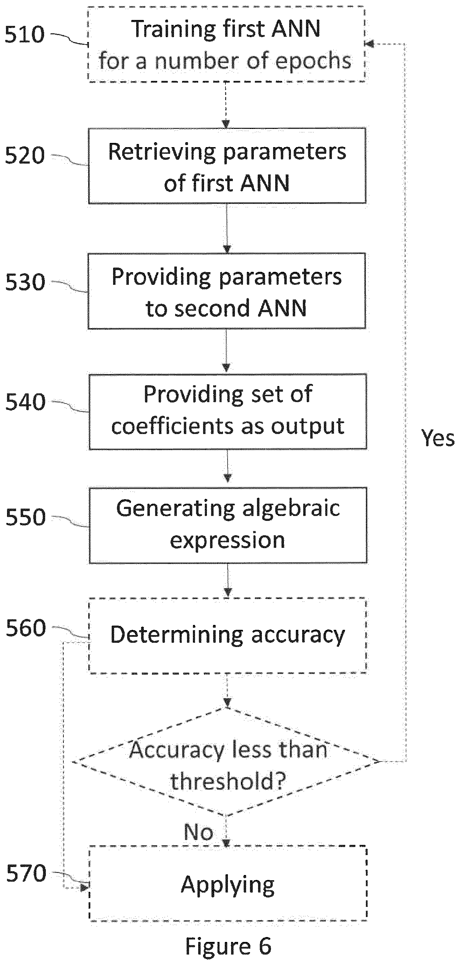

The algebraic expression 400 provides a second approximation of the target function $f(i_1, i_2, i_3)$. In this particular illustrative case, the second approximation is actually just an alternative formulation of the target function, so that $E(i_1, i_2, i_3) = f(i_1, i_2, i_3)$. In a more general case, it may be that $E(i_1, i_2, i_3) \approx f(i_1, i_2, i_3)$. Advantageously, the accuracy of the second approximation is greater than the accuracy of the first approximation, as will also be discussed with reference to Figure 6 below.

The exemplary method for shifting from the first approximation to the second approximation, and, thus, optimising the application of an artificial neural network to obtain e.g. a prediction is shown in **Figure 6.** The dashed boxes indicate optional steps of the method.

The derivation of the algebraic expression 400 (second approximation) from the first ANN 100 (first approximation) may be performed for an already fully-trained first ANN 100, in which case the method starts at 520. Otherwise, the second ANN 200 may be used already while training the first ANN 100, in which case the method starts at 510.

At 510, the first ANN is trained for a number of epochs using a learning data set comprising a training data set and a validation data set. This number of epochs $N_e$ is much less than the number of epochs $N_t$ for which the first ANN would conventionally be trained if it were to be employed on application data sets, e.g. based on strategies such as early stopping. In particular, it may be that $N_e < N_t/10$ or, further exemplarily $N_e < N_t/20$. For example, $N_e = 5$.

At 520, a set of parameters 160 of the first ANN 100 providing a first approximation of a target function is retrieved. The set of parameters 160 comprises the weights and biases of the first ANN 100. As mentioned, this set of parameters 160 may belong to a fully-trained or a partially-trained first ANN 100.

At 530, the set of parameters 160 is fed as input to the second ANN 200, which is then executed in order to provide, at 540, a set of coefficients 280 as output. The second ANN 200 is associated with a representation basis 300 in an algebra. In particular, the representation basis 300 and its algebra are suitable for providing a symbolic representation of the target function within a desired accuracy. The representation basis 300 comprises a set of elements having the same cardinality as the set of coefficients 280. It further comprises a composition criterion dictating how the elements are to be combined with each other.

Using the set of coefficients 280 output by the second ANN 200 and the representation basis 300 to which the second ANN 200 is associated, an algebraic expression 400 is generated at 550. Each coefficient is assigned to a respective element of the representation basis 300 to form coefficient-weighted elements which are combined using the composition criterion. The algebraic expression 400 obtained in this manner represents, in virtue of how the second ANN 200 operates (i.e. how it has been trained), a second approximation of the target function.

If the first ANN 100 was fully trained, the method may proceed to 570, i.e. applying the algebraic expression 400 to an application data set. In some examples, before employing the algebraic expression 400, its performance may be evaluated using a test data set and, if needed, a user may modify the algebraic expression 400.

If the first ANN 100 was only partially trained, the method may proceed to 560. At 560 the accuracy $A(E)$ of the second approximation is determined by using the learning data set with the algebraic expression 400. In other words, the input values of the learning data sets are assigned to the input variables of the algebraic expression 400 and the results obtained by computing the algebraic expression 400 are compared with the respective output values of the learning data set. The lower the deviation between the results of the algebraic expression 400 and the goal output values, the higher the accuracy.

The accuracy $A(E)$ is compared with a threshold accuracy $At_h$, which may e.g. be set by a user. If $A(E) < A_{th}$, the training step 510, the transformation step 520-550 and the assessment step 560 are repeated until $A(E) \geq A_{th}$. The algebraic expression 400 E that finally satisfies the latter condition can then be evaluated using a test data set and/or be used on an application data set.

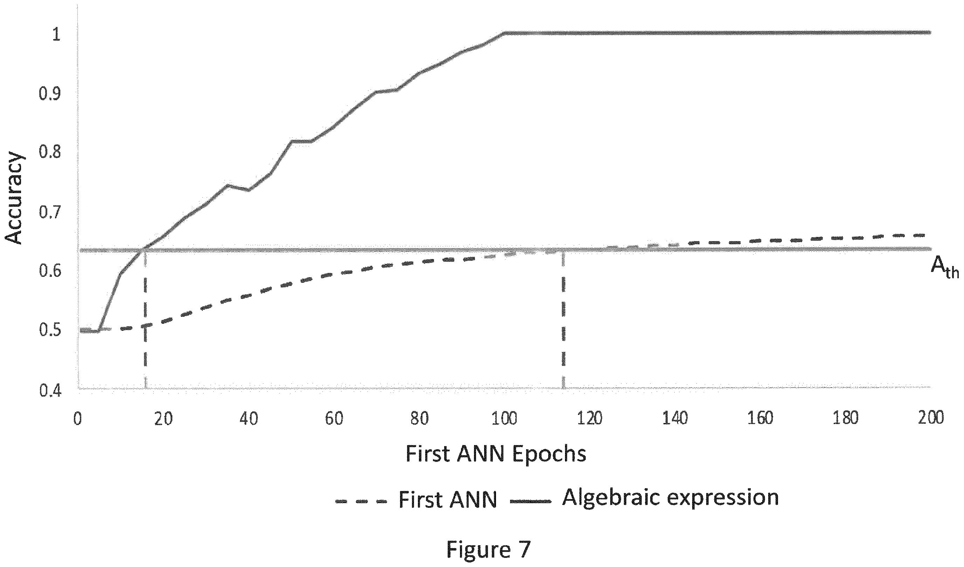

**Figure 7** shows a plot comparing the accuracy of a first approximation with the accuracy of a second approximation of a Boolean target function. Specifically, the plot shows as a dashed line the accuracy $A(O)$ of the output of the first ANN as a function of the number of epochs for which the first ANN has been trained. After each epoch, an algebraic expression 400 E is generated in the way explained above from the first ANN and the accuracy $A(E)$ is plotted as a solid line. Both accuracies are determined using the same test data set.

First of all, it can be seen that $A(E)$ is always greater than $A(O)$. Accordingly, the second approximation is always more accurate than the first approximation. Thus, when the algebraic expression 400 is used instead of the first ANN from which it is derived, there is always a gain in the accuracy.

Secondly, the slope of the solid line is greater than the slope of the dashed line, meaning that $A(E)$ converges to higher values, e.g. to a threshold value, faster than $A(O)$. Therefore, if for example the accuracy necessary for a certain application is $A_{th} = 0.65$, conventionally executing the first ANN would require the first ANN to be trained for about 115 epochs. Instead, the algebraic expression 400 reaches the threshold accuracy already after about 15 epochs. Hence, if the training time is adaptively determined as explained above, i.e. by looking at $A(E)$ already while training the first ANN, time and computational resources can be saved without reducing the quality.

**Claims**

1. A computer-implemented method comprising performing a transformation step comprising:

   retrieving (520) a set of parameters (160) of a first artificial neural network (100), wherein:

   the set of parameters (160) includes at least a plurality of weights; and
   the first artificial neural network (100) provides a first approximation of a target function;

   providing (530) the set of parameters (160) as input to a second artificial neural network (200) associated with a representation basis (300) in an algebra;
   providing (540), by the second artificial neural network (200), a set of coefficients (280) as output;
   generating (550) a combination of the representation basis (300) with the set of coefficients (280);
wherein the set of coefficients (280) is such that the combination of the representation basis (300) with the set of coefficients (280) provides an algebraic expression (400) of a second approximation of the target function.

2. The method of claim 1, further comprising selecting the second artificial neural network (200) out of a plurality of second artificial neural networks based on the target function.

3. The method of claim 1 or 2, wherein:

the set of coefficients (280) comprises a plurality of coefficients;
the representation basis (300) comprises a plurality of elements and a composition criterion;
the number of coefficients equals the number of elements;
and
generating the combination of the representation basis (300) with the set of coefficients (280) comprises:

assigning one coefficient of the plurality of coefficients to one respective element of the plurality of elements to form coefficient-weighted elements; and
combining all coefficient-weighted elements with each other using the composition criterion.

4. The method of any one of the preceding claims, further comprising:
evaluating the algebraic expression (400) of the second approximation on an input data set.

5. The method of claim 4, wherein the input data set is a test data set and the method further comprises:
modifying, in response to a user input, the algebraic expression (400).

6. The method of any one of the preceding claims, further comprising:

before performing the transformation step, performing a training step (510) comprising training the first artificial neural network (100) for a number of epochs using a learning data set;
after performing the transformation step, performing an assessment step (560) comprising evaluating the algebraic expression (400) of the second approximation using at least part of the learning data set to determine an accuracy of the second approximation; and
if the accuracy of the second approximation is less than a threshold accuracy, repeating the training step (510), the transformation step and the assessment step (560) until the accuracy is equal to or greater than the threshold accuracy.

7. A computer program product comprising computer-readable instructions, which, when executed by a computer, cause the computer to carry out the method of any one of the preceding claims.

8. A computer system comprising at least one processor configured to perform a transformation step comprising:

retrieving (520) a set of parameters (160) of a first artificial neural network (100), wherein:

the set of parameters (160) includes at least a plurality of weights; and
the first artificial neural network (100) provides a first approximation of a target function;

providing (530) the set of parameters (160) as input to a second artificial neural network (200) associated with a representation basis (300) in an algebra;
providing (540), by the second artificial neural network (200), a set of coefficients (280) as output;
generating (550) a combination of the representation basis (300) with the set of coefficients (280);
wherein the set of coefficients (280) is such that the combination of the representation basis (300) with the set of coefficients (280) provides an algebraic expression (400) of a second approximation of the target function.

9. The system of claim 8, wherein the at least one processor is further configured to select the second artificial neural network (200) out of a plurality of second artificial neural networks based on the target function.

10. The system of claim 8 or 9, wherein:

the set of coefficients (280) comprises a plurality of coefficients;
the representation basis (300) comprises a plurality of elements and a composition criterion;
the number of coefficients equals the number of elements;
and
generating (550) the combination of the representation basis (300) with the set of coefficients (280) comprises:

assigning one coefficient of the plurality of coefficients to one respective element of the plurality of elements to form coefficient-weighted elements; and

combining all coefficient-weighted elements with each other using the composition criterion.

11. The system of any one of claims 8 to 10, wherein the at least one processor is further configured to evaluate the algebraic expression (400) of the second approximation on an input data set.

12. The system of claim 11, wherein the input data set is a test data set and the at least one processor is further configured to:

modify, in response to a user input, the algebraic expression (400).

13. The system of any one of claims 8 to 12, wherein the at least one processor is further configured to:

before the transformation step, perform a training step (510) comprising training the first artificial neural network (100) for a number of epochs using a learning data set;

after the transformation step, perform an assessment step (560) comprising evaluating the algebraic expression (400) of the second approximation using at least part of the learning data set to determine an accuracy of the second approximation; and

if the accuracy of the second approximation is less than a threshold accuracy, repeat the training step (510), the transformation step and the assessment step (560) until the accuracy is equal to or greater than the threshold accuracy.

Figure 1 – Prior Art

Figure 2

Figure 3

EP 3 968 234 A1

Figure 4

Figure 5

510 — Training first ANN for a number of epochs

520 — Retrieving parameters of first ANN

530 — Providing parameters to second ANN

540 — Providing set of coefficients as output

Yes

550 — Generating algebraic expression

560 — Determining accuracy

Accuracy less than threshold?

No

570 — Applying

Figure 6

Figure 7

EP 3 968 234 A1

**EUROPEAN SEARCH REPORT**

Application Number

EP 20 19 5894

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/238092 A1 (SUDO YASUHIRO [JP] ET AL) 1 August 2019 (2019-08-01) * abstract; figures 2-5, 11, 22, 23 * * paragraph [0065] - paragraph [0073] * * paragraph [0105] - paragraph [0113] * * paragraph [0167] - paragraph [0180] * | 1-13 | INV. G06N3/04 G06N3/08 |
| A | FRANK NO\'E: "Machine Learning for Molecular Dynamics on Long Timescales", ARXIV.ORG, CORNELL UNIVERSITY LIBRARY, 201 OLIN LIBRARY CORNELL UNIVERSITY ITHACA, NY 14853, 18 December 2018 (2018-12-18), XP080994427, * abstract; figures 1, 2 * * page 3, line 3 - page 8, line 28 * | 1-13 | |
| A | JP 3 081115 B2 (MATSUSHITA ELECTRIC IND CO LTD) 28 August 2000 (2000-08-28) * abstract; figures 1-3 * * paragraph [0010] - paragraph [0017] * | 1-13 | |

TECHNICAL FIELDS SEARCHED (IPC)

G06N

The present search report has been drawn up for all claims

| Place of search | Date of completion of the search | Examiner |
|---|---|---|
| The Hague | 4 March 2021 | Rousset, Antoine |

## ANNEX TO THE EUROPEAN SEARCH REPORT
## ON EUROPEAN PATENT APPLICATION NO.

EP 20 19 5894

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2021

| Patent document cited in search report | | | Publication date | Patent family member(s) | | | Publication date |
|---|---|---|---|---|---|---|---|
| US 2019238092 | A1 | | 01-08-2019 | CN<br>JP<br>US | 110086430<br>2019129487<br>2019238092 | A<br>A<br>A1 | 02-08-2019<br>01-08-2019<br>01-08-2019 |
| JP 3081115 | B2 | | 28-08-2000 | JP<br>JP | 3081115<br>H0874636 | B2<br>A | 28-08-2000<br>19-03-1996 |

For more details about this annex : see Official Journal of the European Patent Office, No. 12/82